# EUROPÄISCHE PATENTSCHRIFT

(11) **EP 2 504 186 B1**
(45) Veröffentlichungstag und Bekanntmachung des Hinweises auf die Patenterteilung: **25.09.2013**
(21) Anmeldenummer: 10798715.8
(22) Anmeldetag: 22.11.2010
(51) Int. Cl.: B60J 5/10

(54) **HECKKLAPPE AUS FASERVERSTÄRKTEM THERMOPLASTISCHEM KUNSTSTOFF**
TRUNK LID MADE OF FIBER-REINFORCED THERMOPLASTIC PLASTIC
HAYON EN PLASTIQUE THERMOPLASTIQUE RENFORCE PAR DES FIBRES

(30) Priorität: 25.11.2009 CH 18112009
(43) Veröffentlichungstag der Anmeldung: 03.10.2012
(73) Patentinhaber: Weber Automotive AG-Holding, 8700 Küsnacht (CH)
(72) Erfinder: GÄCHTER, Matthias, CH-8037 Zürich (CH); JAGGI, Diego, CH-8049 Zürich (CH); RÜEGG, Andreas, CH-8053 Zürich (CH); ZIEGLER, Stefan, CH-8005 Zürich (CH); STÖTZNER, Norbert, 88677 Markdorf (DE)
(86) Internationale Anmeldenummer: PCT/CH2010/000293
(87) Internationale Veröffentlichungsnummer: WO 2011/063538

(56) Entgegenhaltungen:
- EP-A1- 1 359 005
- EP-A1- 1 498 295
- WO-A1-2004/024426
- DE-A1- 10 392 573

## Beschreibung

Die Erfindung betrifft eine Heckklappe bzw. eine Hecktür für ein Kraftfahrzeug mit einer Teiltragstruktur aus faserverstärktem thermoplastischem Kunststoff mit Scharnieren, einem Schloss und einer Heckscheibe gemäss Oberbegriff von Anspruch 1. Seit Langem wird versucht, zwecks Gewichtsreduktion die bestehenden metallischen Heckklappen durch leichtere Kunststoff-Konstruktionen zu ersetzen. Aus der EP 0266 514 ist beispielsweise ein doppelwandiges Kunststoff-Bauteil bekannt, welches jedoch noch aufwendig herzustellen ist und vor allem ungenügende mechanische Eigenschaften aufweist. Um bessere mechanische Eigenschaften zu erreichen, wurden verschiedene Heckklappen mit GMT-Struktur und anschliessend auch mit GMTex, d.h. GMT mit Gewebeverstärkungen, eingesetzt. Da auch diese immer noch nicht genügende mechanische Eigenschaften aufwiesen, wurden weiter Teiltragstrukturen aus faserverstärkten Kunststoffen mit metallischen Rahmenkonstruktionen kombiniert zu einer Haupttragstruktur mit genügenden mechanischen Eigenschaften. Eine solche Kraftfahrzeug-Hecktür mit Metallrahmen ist z.B. aus der EP 1 621 384 bekannt. Auch diese bekannten Heckklappen weisen jedoch ein erhöhtes Gewicht durch die Metallverstärkung auf und sie erfordern eine aufwendigere Herstellung. Die bekannten Heckklappen benötigen somit einerseits noch eine aufwendige Herstellung und weisen ohne Metallverstärkungen ungenügende Festigkeits- und Steifigkeitseigenschaften auf oder sind mit Metallverstärkung aufwendiger herzustellen und auch schwerer.

Aufgabe der vorliegenden Erfindung ist es, die Nachteile und Beschränkungen der bekannten Heckklappen zu überwinden und eine leichtere, steifere, einfacher und kostengünstiger herstellbare Kunststoff-Heckklappe zu schaffen, welche auch verschiedenste Formgebungen ermöglicht. Im Speziellen soll eine faserverstärkte Haupttragstruktur geschaffen werden ohne zusätzliche Metallverstärkungen. Diese Aufgabe wird erfindungsgemäss gelöst durch eine Heckklappe oder eine Hecktür nach Anspruch 1.

Die einstückige Haupttragstruktur mit einem umlaufenden, biegesteifen Rahmen mit integrierten Endlosfaser-Bändern in vertikaler Ausrichtung zur Oberfläche der Heckklappe, in Kombination mit der kraftschlüssig verbundenen Heckscheibe und mit sickenförmigen Versteifungen der faserverstärkten Formmasse des Rahmens, ergeben verbesserte mechanische Eigenschaften bezüglich Steifigkeit und Festigkeit, wesentlich reduziertes Gewicht und reduzierten, vereinfachten Herstellungsaufwand.

Die abhängigen Patentansprüche betreffen vorteilhafte Weiterbildungen der Erfindung mit besonderen Vorteilen bezüglich Gewichtsreduktion, verbesserter mechanischer Eigenschaften und vereinfachter, rationeller Produktion. Im Folgenden wird die Erfindung anhand von Ausführungsbeispielen und Figuren weiter erläutert, dabei zeigen:
- Fig. 1, 2: Beispiele von erfindungsgemässen Heckklappen mit einer Haupttragstruktur aus faserverstärktem thermoplastischem Kunststoff mit einem umlaufenden Rahmen mit integrierten Endlosfaser-Bändern in vertikaler Anordnung;
- Fig. 3: vertikale Anordnungen von Endlosfaser-Bändern bezüglich der Oberfläche der Heckklappe;
- Fig. 4: einen vertikalen Schnitt durch eine erfindungsgemässe Heckklappe;
- Fig. 5-8: im Schnitt Anordnungen von Endlosfaser-Bändern im Rahmen der Hauptragstruktur:

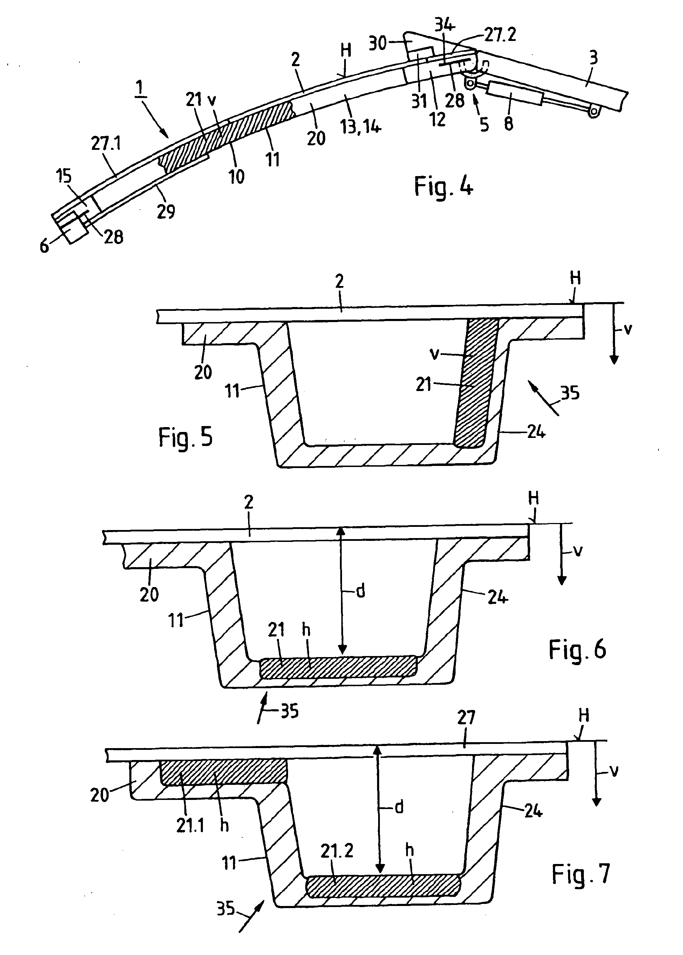

- Fig. 5: - mit einem vertikalen Endlosfaser-Band in einer Sicke;
- Fig. 6: - mit einem horizontalen Endlosfaser-Band in einem vertikalen Abstand zur Oberfläche;
- Fig. 7: - mit einem oberen und einem unteren horizontalen Endlosfaser-Band;

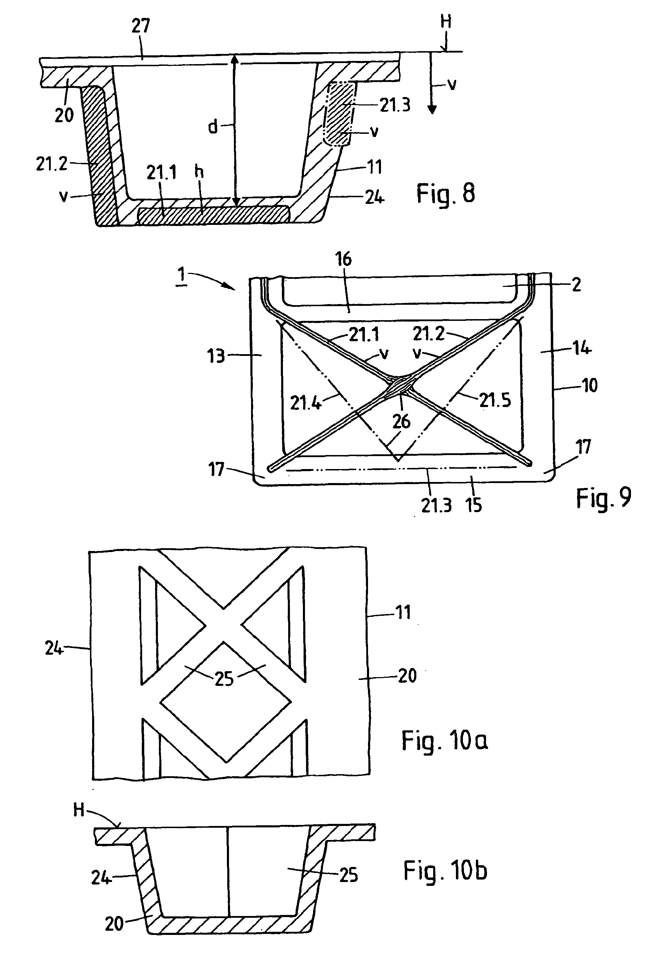

- Fig. 8: - mit einem vertikalen und einem unteren horizontalen Endlosfaser-Band;
- Fig. 9: eine Haupttragstruktur mit einer diagonalen oder kreuzförmigen Anordnung von Endlosfaser-Bändem;

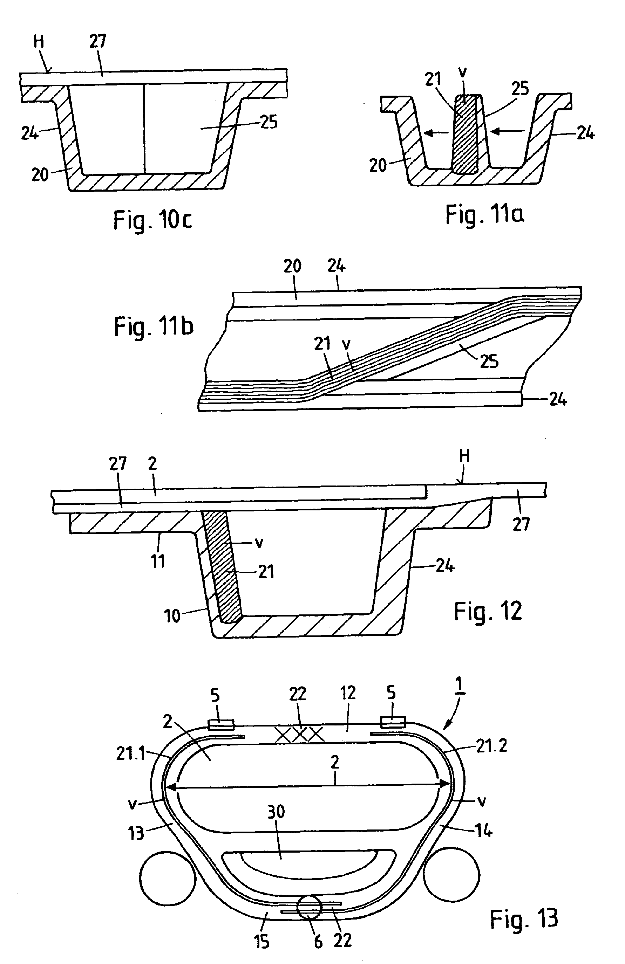

- Fig. 10a, b, c: einen sicken- oder wannenförmigen Träger mit einer diagonalen Verrippung;
- Fig. 11a, b: ein vertikales Endlosfaser-Band in einer Rippe;
- Fig. 12: eine mit der Haupttragstruktur und der Heckscheibe verbundene Kunststoff-Aussenabdeckung;
- Fig. 13: ein weiteres Beispiel einer Heckklappe mit stark gerundetem Rahmen und mit zwei Endlosfaser-Bändem.

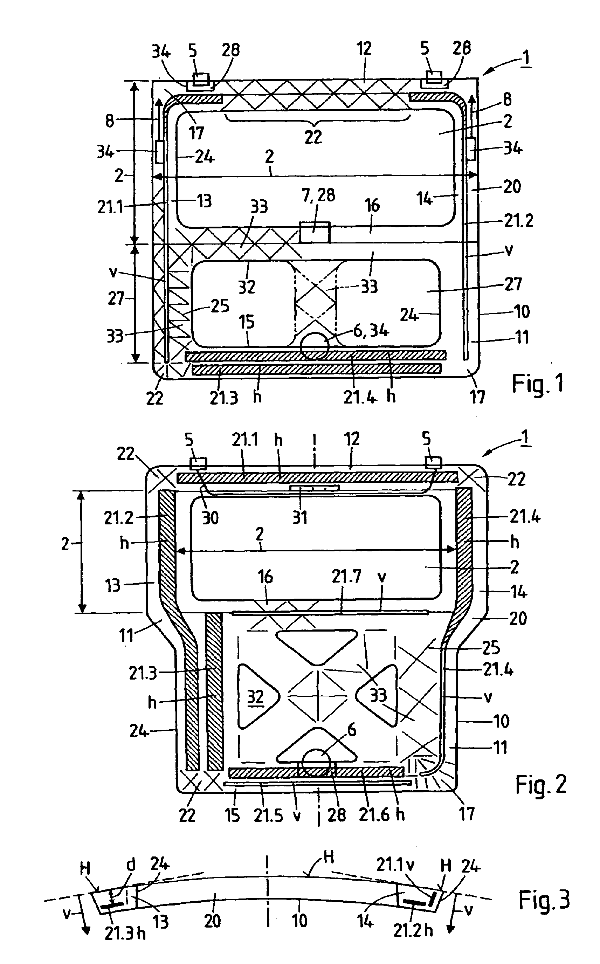

Die Fig. 1 und 2 zeigen Beispiele einer erfindungsgemässen Heckklappe 1 bzw.
Hecktür für ein Kraftfahrzeug mit einer Struktur aus faserverstärktem thermoplastischem Kunststoff und mit Scharnieren 5, einem Schloss 6 und einer Heckscheibe 2. Die Heckklappe weist eine einstückige Haupttragstruktur 10 mit einem umlaufenden biegesteifen Rahmen 11, mit einem oberen Querträger 12, zwei seitlichen Längsträgern 13, 14 und mindestens einen unteren Querträger 15 auf. Die Haupttragstruktur besteht aus einer faserverstärkten Formmasse 20 mit mindestens zwei imprägnierten integrierten Endlosfaser-Bändern 21, welche mit der Heckscheibe 2 kraftschlüssig verbundenen ist und mit dieser zusammen eine biegesteife Struktur bildet. Dabei sind die Endlosfaser-Bänder 21 streckenweise in den Rahmen 11 integriert in einer Anordnung vertikal (v) zur Oberfläche H der Heckklappe, indem die Endlosfaser-Bänder 21 vertikal zur Oberfläche H und/oder mit einem vertikalen Abstand d zur Oberfläche H angeordnet sind (siehe Fig. 3). Die Endlosfaser-Bänder sind durch räumliche Ausformungen der faserverstärkten Formmasse 20 als kraftübertragende und
versteifende Verbindungsbereiche 22 miteinander verbunden und der Rahmen 11 weist sickenförmige Versteifungen 24 der Formmasse 20 auf, bzw. ist sickenformig ausgebildet. Damit wird eine Heckklappe mit reduziertem Gewicht, verbesserten mechanischen Eigenschaften und vereinfachter Herstellung geschaffen. Vorzugsweise kann der sickenförmige Rahmen 11 zusätzlich auch rippenförmige Versteifungen 25 aufweisen.
Fig. 3 zeigt im Schnitt vertikale Anordnungen der integrierten Endlosfaser-Bänder 21 in einer Sicke 24 des Rahmens 11 bezüglich der äusseren Oberfläche H der Heckklappe:
   - mit einem vertikalen Abstand d zur Oberfläche H (d.h. zur Tangentialebene an die Oberfläche)
   - und/oder mit vertikaler Ausrichtung zur Oberfläche H. In Fig. 3 weisen die horizontalen (h) Endlosfaser-Bänder 21.2 und 21.3 einen Abstand d zur Oberfläche H auf und ein vertikales (v) Endlosfaser-Band 21.1 weist eine Ausdehnung in vertikaler Richtung zu H auf.

Die Beispiele von Fig. 1 und 2 weisen folgende vertikale Anordnungen der Endlosfaser-Bänder im Rahmen 11 auf:
Fig. 1 zeigt zwei vertikale (v) Endlosfaser-Bänder 21.1 und 21.2 in den seitlichen Längsträgern 13 und 14 (siehe Fig. 5) und im unteren Querträger 15 ein unteres horizontales (h) Endlosfaser-Band 21.3 mit Abstand d zur Oberfläche und ein oberes horizontales Endlosfaser-Band 21.4 an der Oberfläche H (siehe Fig. 7).
Fig. 2 zeigt zwei verschiedene Varianten von möglichen Anordnungen in den seitlichen Längsträgern:
   - In Variante links, im Längsträger 13: ein unteres horizontales (h) Endlosfaser-Band 21.2 mit Abstand d zur Oberfläche H im Bereich der Heckscheibe 2 und im Bereich unterhalb der Heckscheibe ein zusätzliches zweites horizontales (h) Endlosfaser-Band 21.3 an der Oberfläche H.
   - In Variante rechts, im Längsträger 14 im Bereich der Heckscheibe: ein Endlosfaser-Band 21.4, welches hier horizontal (h) mit Abstand d zur Oberfläche H verläuft und welches für den Bereich unterhalb der Heckscheibe in die vertikale Richtung (v) gedreht ist.
   Beide Varianten weisen im oberen Querträger 12 ein horizontales (h) Endlosfaser-Band 21.1 und im unteren Querträger 15 ein horizontales (h) Endlosfaser-Band 21.6 mit Abstand d zur Oberfläche H und ein vertikales (v) Endlosfaser-Band 21.5 auf (siehe Fig. 8).

Mit Vorteil können die Endlosfaser-Bänder 21 in Ecken 17 des Rahmens 11 auch umgebogen sein und z.B. von einem Längsträger in einen Querträger hineingebogen sein, wie in Fig. 1 die Endlosfaser-Bänder 21.1, 21.2 von den Längsträgern 13, 14 in den oberen Querträger 12 hineingebogen sind bis hin zu den Scharnieren 5. In Fig. 2 rechts ist das Endlosfaser-Band 21.4 an der Ecke 17 in den unteren Querträger 15 hineingebogen.

Sehr wichtig sind auch die Verbindungsbereiche 22 mit denen die Endlosfaser-Bänder durch räumliche Ausformungen (z.B. sicken- oder rippenförmig) der faserverstärkten Formmasse 20 kraftübertragend und versteifend miteinander verbunden sind, z.B. in den Ecken 17 des Rahmens 11 und in Fig. 1 im oberen Querträger 12 zwischen den Endlosfaser-Bändern 21.1 und 21.2.

Je nach Form und Grösse der Heckklappe bzw. der Hecktür sind vorzugsweise der Rahmen 11 und auch Bereiche 33 innerhalb des Rahmens 11 mit sickenförmigen 24 und rippenförmigen 25 Versteifungen ausgebildet. So weisen die Fig. 1 und 2 einen zusätzlichen profilierten sickenförmigen Querträger 16 am unteren Rand der Heckscheibe 2 auf, hier mit einer Halterung 28 für einen Wischermotor 7. Dieser Querträger 16 kann auch ein zusätzliches Endlosfaser-Band 21.7 aufweisen (Fig. 2). Die Haupttragstruktur weist meist auch Öffnungen 32 auf, wie Fig. 1 und 2 zeigen, welche mit Aussenabdeckungen 27 auf der Haupttragstruktur 10 überdeckt werden. Die Endlosfaser-Bänder 21 sind vorzugsweise so ausgelegt, dass sie sich bis zu Lastaufnahmestellen 34 hin erstrecken, so dass einwirkende Kräfte direkt von den Endlosfaser-Bändern aufgenommen werden können:
In Fig. 1 an Lastaufnahmestellen 34 von den Federdämpferelementen 8 und von den Scharnieren 5 durch die Endlosfaser-Bänder 21.1 und 21.2 und vom Schloss 6 durch die Endlosfaser-Bänder 21.3 und 21.4. Dabei können als Lastaufnahmestellen 34 Einlegeteile 28 zur Befestigung von Schloss 6, Scharnieren 5, Federdämpferelementen 8 und Wischermotor 7 einfach in die Haupttragstruktur 10 integriert werden zur Aufnahme von angreifenden Kräften.

Fig. 4 zeigt schematisch einen vertikalen Schnitt durch eine Heckklappe (ähnlich Fig. 1) mit vertikalen (v) Endlosfaser-Bändern 21 in den Längsträgern 13, 14. Die Haupttragstruktur 10 weist hier als Aussenhaut bzw. Karosserieoberfläche in einem Bereich neben der Heckscheibe 2 zusätzlich leichte Kunststoff-Aussenabdeckungen 27 auf, welche an der Haupttragstruktur 10 fixiert bzw. vorzugsweise aufgeklebt sowie lackiert oder eingefärbt sind. Solche Aussenabdeckungen können unterhalb (27.1), oberhalb (27.2) oder seitlich neben der Heckscheibe angebracht sein. Als Aussenabdeckung kann auch ein Kunststoff-Heckspoiler 30 an der Haupttragstruktur 10 fixiert oder aufgeklebt sein. Die Haupttragstruktur 10 mit dem sickenförmigen, umlaufenden biegesteifen Rahmen 11 kann vorzugsweise an der äusseren Sichtoberfläche (H) ausserhalb - vor allem unterhalb - der Heckscheibe 2 durch eine Kunststoffschicht als Aussenabdeckung 27 abgedeckt werden, welche mit der Haupttragstruktur 10 kraftschlüssig verbunden ist und damit die Biege- und Torsionssteifigkeit der Heckklappe zusätzlich erhöhen kann. Im Beispiel von Fig. 4 ist ein Heckspoiler 30 oberhalb der Heckscheibe angeordnet, wobei damit auch Zusatzkomponenten 31 wie eine dritte Bremsleuchte, eine Antenne oder eine Rückfahrkamera eingebaut sein können. Auf der Innenseite der Haupttragstruktur 10 kann in Teilbereichen auch eine zusätzliche Innenabdeckung 29 als Innenverkleidung angebracht sein (z.B. eine Filzschicht oder eine leichte Kunststoff-Schicht). Stellenweise kann diese Innenabdeckung 29 auch aus faserverstärktem Kunststoff (mit oder ohne Endlosfasern) bestehen und mit der Haupttragstruktur kraftschlüssig verbunden sein und so eine zusätzliche Versteifung bilden. Federdämpferelemente 8 sind hier an den Scharnieren 5 mit Halterungen 28 und am Chassis 3 abgestützt.

Die Fig. 5-8 illustrieren im Querschnitt verschiedene Anordnungen von Endlosfaser-Bändern 21 in einer Sicke 24 des Rahmens 11 mit einer Anordnung in vertikaler Richtung (v) zur Oberfläche H der Heckklappe. Die imprägnierten Endlosfaser-Bänder 21 sind in die Formmasse 20 integriert. In Bereichen, wo die Haupttragstruktur eine innere Sichtoberfläche 35 bildet (und nicht durch eine Innenverkleidung überdeckt wird), sind die Endlosfaser-Bänder vorzugsweise durch Formmasse 20 überdeckt, so dass die Sichtoberfläche 35 durch die Formmasse 20 gebildet wird, wie die Fig. 5-7 zeigen.

Fig. 5 zeigt ein integriertes vertikales (v) Endlosfaser-Band 21 in einer Wanne oder Sicke 24 aus faserverstärkter Formmasse 20. Diese kann zusätzlich eine Verrippung 25 aufweisen, wie z.B. in Fig. 10 gezeigt ist, und z.B. Längsträger 13, 14 bilden.

Fig. 6 zeigt eine Sicke mit einem integrierten horizontalen (h) Endlosfaser-Band 21 in einem vertikalen Abstand d zur Oberfläche H, welche hier von der kraftschlüssig aufgeklebten Heckscheibe 2 gebildet wird und in Kombination mit dieser einen biegesteifen Rahmen 11 bildet.

Fig. 7 zeigt ein Beispiel eines Rahmens 11 mit einem horizontalen (h) Endlosfaser-Band 21.1 an der Oberfläche H und einem horizontalen Endlosfaser-Band 21.2 mit vertikalem Abstand d zur Oberfläche in einer Sicke 24. Diese Struktur, wie auch jene von Fig. 5 und 8, bildet alleine, auch ohne Heckscheibe, eine biegesteife Rahmenstruktur 11. Eine zusätzliche, aufgeklebte leichte Kunststoffschicht als Aussenabdeckung 27 kann, vor allem im Bereich unterhalb der Heckscheibe, zusätzlich verstärkend wirken.

Fig. 8 zeigt eine Sicke 24 mit einem unteren horizontalen Endlosfaser-Band 21.1 mit Abstand d zur Oberfläche H und einem vertikalen Endlosfaser-Band 21.2, welche hier (sichtbar) an der inneren Oberfläche liegen. Als weitere Variante könnte auch ein dickeres vertikales Endlosfaser-Band 21.3 weiter oben zur Oberfläche H hin mit dem Endlosfaser-Band 21.1 zusammen zu einer biegesteifen Struktur kombiniert werden.

Fig. 9 zeigt weitere Varianten von biegesteifen Haupttragstrukturen 10 mit kreuzförmigen, d.h. sich kreuzenden vertikal angeordneten Endlosfaser-Bändern 21.1 und 21.2 oder mit diagonalen (26) Endlosfaser-Bändern 21.4 und 21.5 sowie mit 21.3 im Bereich unterhalb der Heckscheibe 2, welche sich bis an die unteren Ecken 17 der Haupttragstruktur 10 erstrecken. An der Kreuzungsstelle 26 können vertikale Endlosfaser-Bänder 21.1, 21.2 lokal je auf halbe Höhe (d/2) verformt sein, um sich innerhalb einer gegebenen Höhe (d) kreuzen zu können. Oder die Kreuzungsstelle könnte durch ein oberes und ein unteres horizontales Endlosfaser-Band sowie ein dazwischen liegendes, kreuzendes vertikales Endlosfaser-Band gebildet werden.

Die Fig. 10a, b zeigen in zwei Ansichten eine Trägerstruktur bzw. Längsträger oder Querträger, welche vorzugsweise als Wanne oder Sicke 24 mit einer diagonalen oder kreuzförmigen Verrippung 25 ausgebildet sind. Auch alle integrierten Endlosfaser-Bänder 21 werden in sickenförmige und/oder rippenförmige Strukturen der faserverstärkten Formmasse 20 integriert. Fig. 10c zeigt zusätzlich eine kraftschlüssig verbundene Deckschicht 27, womit ein geschlossenes torsionssteifes Profil gebildet wird, z.B. als oberer Querträger 12 in Fig. 1.

Die Fig. 11a, b zeigen in zwei Ansichten ein Beispiel mit einem vertikalen Endlosfaser-Band 21 in einer Rippe 25, welche von einer Sickenwand (24) kontinuierlich in die gegenüberliegende Sickenwand übergeht.

Mit dem erfindungsgemässen Aufbau der Haupttragstruktur 10 aus faserverstärkter Formmasse 20, welche beliebige Formgebungen ermöglicht, und mit integrierten Endlosfaser-Bändern 21, welche den mechanischen Lastanforderungen entsprechend optimal angeordnet und geformt sind, können leichtere, einfach aufgebaute Haupttragstrukturen 10 und damit Heckklappen 1 oder Hecktüren geschaffen werden. Dies mit verbesserten mechanischen Eigenschaften und rationeller, kostengünstiger Herstellung. Zudem wird auch eine weitgehende Formfreiheit für Heckklappen bzw. Hecktüren verschiedenster Art ermöglicht, z.B. auch Hecktüren mit seitlich angeordneten Schloss und Scharnieren. Dazu können auch die integrierten Endlosfaser-Bänder 21 vorzugsweise entsprechend gebogen und profiliert sein.

Vorzugsweise kann die Haupttragstruktur 10 in einem Fliesspressverfahren oder in einem Spritzgussverfahren hergestellt werden mit in eine Werkzeugform eingelegten, geformten und formstabilisierten Endlosfaser-Bändern oder -Profilen. Ein solches vorteilhaftes Herstellverfahren ist z.B. in der WO 2004/024426 angegeben. Die imprägnierten Endlosfaser-Bänder bzw. -Profile bestehen vorzugsweise aus UD-(unidirektionalen) Endlosfasern in einer Polymermatrix (z.B. Endlosglasfasern in Polypropylen PP) und die faserverstärkte Formmasse 20 weist vorzugsweise eine mittlere Faserlänge von mindestens 2 mm auf (obwohl auch kürzere Fasern eingesetzt werden könnten). Je nach Anforderung können noch bessere mechanische Eigenschaften erzielt werden mit Faserlängen von 5-10 mm und mehr (Langfaserverstärkung). Natürlich können auch andere Polymere und Verstärkungsfasern eingesetzt werden (z.B. Polyamide PA und Kohlefasern).

Fig. 12 zeigt als weitere Variante einen Rahmen 11, auf welchen in einem Teilbereich eine Kunststoff-Aussenverkleidung 27 und darüber die Heckscheibe 2 aufgeklebt ist.

Auch Fig. 13 zeigt eine weitere Variante einer Heckklappe 1 mit stark gebogenen Längsträgern 13, 14, welche unten in einen gerundeten Querträger 15 übergehen. Die Heckscheibe 2 ist hier in Richtung zur C-Säule hin herumgebogen. Die Endlosfaser-Verstärkung besteht aus nur zwei vertikalen Endlosfaser-Bändern 21.1 und 21.2, welche sich, beginnend an den Scharnieren 5, durch die Längsträger bis in den Querträger 15 hin erstrecken und sich dort überlappen und kraftschlüssig verbunden sind (22). Ein Kunststoff-Heckspoiler 30 kann hier beispielsweise unterhalb der Scheibe 2 angebracht sein.

Im Rahmen dieser Beschreibung werden folgende Bezeichnungen verwendet:
- 1: Heckklappe, Hecktür
- 2: Heckscheibe
- 3: Chassis
- 5: Scharniere
- 6: Schloss
- 7: Wischermotor
- 8: Federdämpferelemente
- 10: Haupttragstruktur
- 11: umlaufender Rahmen
- 12: oberer Querträger

- 13, 14: seitliche Längsträger
- 15, 16: untere Querträger
- 17: Ecken von 11
- 20: faserverstärkte Formmasse
- 21: Endlosfaser-Bänder, -Profile
- 22: Verbindungsbereiche zwischen 21
- 24: Sicke, Wanne
- 25: Verrippung
- 26: kreuzförmige oder diagonale Anordnung
- 27: Kunststoff-Aussenabdeckung, Aussenschicht
- 28: Einlegeteile, Halterung
- 29: Innenabdeckung, Innenverkleidung
- 30: Heckspoiler
- 31: Zusatzkomponenten
- 32: Öffnungen in 10
- 33: Bereiche mit 24, 25
- 34: Lastaufnahmestellen
- 35: Sichtoberfläche
- H: äussere Oberfläche der Heckklappe, Tangentialebene zu H
- v: vertikal zu H, in vertikaler Richtung zu H
- h: horizontale Ausrichtung
- d: vertikaler Abstand zu H

## Patentansprüche

1. Heckklappe (1) bzw. Hecktür für ein Kraftfahrzeug mit einer Teiltragstruktur aus faserverstärktem thermoplastischem Kunststoff, mit Scharnieren (5), einem Schloss (6) und einer Heckscheibe (2), umfassend
- eine einstückige Haupttragstruktur (10) mit einem umlaufenden biegesteifen
Rahmen (11), welcher einen oberen Querträger (12), zwei seitliche Längsträgern (13, 14) und mindestens einen unteren Querträger (15) aufweist,
- wobei der Rahmen (11) sickenförmige (24) Versteifungen der Formmasse (20) aufweist,
- **dadurch gekennzeichnet, dass** die Haupttragstruktur aus einer faserverstärkten Formmasse (20) mit mindestens zwei imprägnierten integrierten Endlosfaser-Bändern (21) besteht und mit der Heckscheibe (2) kraftschlüssig verbunden ist und mit der Heckscheibe zusammen eine biegesteife Struktur bildet,
- wobei die Endlosfaser-Bänder (21) streckenweise in den Rahmen (11) integriert sind und eine Anordnung vertikal (v) zur Oberfläche (H) der Heckklappe aufweisen,
- indem die Endlosfaser-Bänder (21) vertikal zur Oberfläche (H) und/oder mit einem vertikalen Abstand (d) zur Oberfläche (H) angeordnet sind
- und wobei die Endlosfaser-Bänder durch räumliche Ausformungen der faserverstärkten Formmasse (20) als kraftübertragende und versteifende Verbindungsbereiche (22) miteinander verbunden sind.

2. Heckklappe nach Anspruch 1, **gekennzeichnet durch** eine Haupttragstruktur (10), welche im Rahmen (11) und innerhalb des Rahmens Bereiche (33) mit sickenförmigen (24) und rippenförmigen (25) Versteifungen aufweist.

3. Heckklappe nach Anspruch 1, **gekennzeichnet durch** Endlosfaser-Bänder (21), welche sich bis zu Lastaufnahmestellen (34) hin erstrecken.

4. Heckklappe nach Anspruch 1, **gekennzeichnet durch** einen zusätzlichen sickenförmigen Querträger (16) am unteren Rand der Heckscheibe (2).

5. Heckklappe nach Anspruch 1, **gekennzeichnet durch** vertikal (v) zur Oberfläche (H) angeordnete Endlosfaser-Bänder (21) in den Längsträgern (13, 14).

6. Heckklappe nach Anspruch 1, **gekennzeichnet durch** Teile des Rahmens (11), welche ein vertikales (v) und ein horizontales (h) Endlosfaser-Band aufweisen.

7. Heckklappe nach Anspruch 1, **gekennzeichnet durch** Teile des Rahmens (11), welche ein oberes und ein unteres horizontales (h) Endlosfaser-Band (21) aufweisen.

8. Heckklappe nach Anspruch 1, **gekennzeichnet durch** eine diagonale oder kreuzförmige Anordnung (26) von Endlosfaser-Bändern (21) unterhalb der Heckscheibe (2).

9. Heckklappe nach Anspruch 1, **gekennzeichnet durch** Querträger und/oder Längsträger, welche als Wanne oder Sicke (24) mit einer diagonalen Verrippung (25) ausgebildet sind.

10. Heckklappe nach Anspruch 1, **dadurch gekennzeichnet, dass** die Sichtoberflächen (35, H) der Haupttragstruktur (10) durch die faserverstärkte Formmasse (20) oder durch eine Aussenabdeckung (27) gebildet werden.

11. Heckklappe nach Anspruch 1, **gekennzeichnet durch** eine mit der Haupttragstruktur (10) verbundene Kunststoff-Aussenabdeckung (27) ausserhalb der Heckscheibe.

12. Heckklappe nach Anspruch 1, **gekennzeichnet durch** einen an der Haupttragstruktur (10) fixierten oder aufgeklebten Kunststoff-Heckspoiler (30).

13. Heckklappe nach Anspruch 1, **gekennzeichnet durch** Einlegeteile (28) als Lastaufnahmestellen (34), welche als Befestigungen für das Schloss (6), die Scharniere (5), einen Wischermotor (7) oder für Federdämpferelemente (8) in die Haupttragstruktur (10) integriert sind.

14. Heckklappe nach Anspruch 1, **dadurch gekennzeichnet, dass** die Haupttragstruktur (10) in einem Fliesspressverfahren oder in einem Spritzgussverfahren hergestellt ist mit in eine Werkzeugform eingelegten formstabilisierten imprägnierten Endlosfaser-Bändern (21).

15. Heckklappe nach Anspruch 1, **dadurch gekennzeichnet, dass** die Haupttragstruktur (10) in einem Teilbereich eine zusätzliche, kraftschlüssig verbundene Innenabdeckung (29) aufweist.

## Claims

1. A tailgate (1) or rear door for a motor vehicle, with a carrying structure of fibre-reinforced thermoplastic plastic, with hinges (5), a lock (6) and a rear window (2), comprising a single-piece main carrying structure (10) with a peripheral, flexurally resistant frame (11) which comprises an upper transverse beam (12), two lateral longitudinal beams (13, 14) and at least one lower transverse beam (15), wherein the frame (11) comprises bead-like (24) stiffenings of the moulding compound (20), **characterised in that**
- the main carrying structure consists of a fibre-reinforced moulding compound (20) with at least two impregnated, integrated continuous-fibre bands (21), and is non-positively connected to the rear window (2) and together with the rear window forms a flexurally resistant structure,
- wherein the continuous-fibre bands (21) in sections are integrated into the frame (11) and have an arrangement vertical (v) to the surface (H) of the tailgate,
- by way of the continuous-fibre bands (21) being arranged vertically to the surface (H) and/or at a vertical distance (d) to the surface (H)
- and wherein the continuous-fibre bands are connected to one another by way of spatial shapings of the fibre-reinforced moulding compound (20) as force-transmitting and stiffening connection regions (22).

2. A tailgate according to claim 1, **characterised by** a main carrying structure (10) which in the frame (11) and within the frame comprises regions (33) with bead-like (24) and rib-like (25) stiffenings.

3. A tailgate according to claim 1, **characterised by** continuous-fibre bands (21) which extend up to load accommodation locations (34).

4. A tailgate according to claim 1, **characterised by** an additional bead-like transverse beam (16) on the lower edge of the rear window (2).

5. A tailgate according to claim 1, **characterised by** continuous-fibre bands (21) arranged vertically (v) to the surface (H), in the longitudinal beams (13, 14).

6. A tailgate according to claim 1, **characterised by** parts of the frame (11) which comprise a vertical (v) and a horizontal (h) continuous-fibre band.

7. A tailgate according to claim 1, **characterised by** parts of the frame (11) which comprise an upper and a lower horizontal (h) continuous-fibre band (21).

8. A tailgate according to claim 1, **characterised by** a diagonal or cross-like arrangement (26) of continuous-fibre bands (21) below the rear window.

9. A tailgate according to claim 1, **characterised by** transverse beams and/or longitudinal beams, which are designed as a trough or bead (24) with a diagonal ribbing (25).

10. A tailgate according to claim 1, **characterised in that** the viewed surfaces (35, H) of the main carrying structure (10) are formed by the fibre-reinforced moulding compound (20) or by an outer covering (27).

11. A tailgate according to claim 1, **characterised by** a plastic outer covering (27) connected to the main carrying structure (10), outside the rear window.

12. A tailgate according to claim 1, **characterised by** a plastic rear spoiler (30) which is fixed or bonded on the main carrying structure (10).

13. A tailgate according to claim 1, **characterised by** inserts (28) as load accommodation locations (34) which as fastenings for the lock (6), the hinges (5), a wiper motor (7) or for spring damping elements (8), are integrated into the main carrying structure (10).

14. A tailgate according to claim 1, **characterised in that** the main carrying structure (10) is manufactured with an extrusion pressing method or with an injection moulding method, with shape-stabilised, impregnated continuous-fibre bands (21) which are inserted into a tool mould.

15. A tailgate according to claim 1, **characterised in that** the main carrying structure (10) in a part region comprises an additional, non-positively connected inner covering (29).

## Revendications

1. Hayon arrière (1) ou portière de coffre pour un véhicule automobile ayant une structure portante partielle réalisée dans un matériau synthétique thermoplastique renforcé par fibres, comprenant des charnières (5), une serrure (6) et une vitre arrière (2), comprenant :
- une structure portante principale (10) d'une seule pièce ayant un cadre circulaire rigide à la flexion (11) qui présente un montant transversal supérieur (12), deux montants longitudinaux latéraux (13, 14) et au moins un montant transversal inférieur (15), étant entendu que le cadre (11) présente des renforts de la matière de moulage (20) en forme de moulures (24),
**caractérisé**
- **en ce que** la structure portante principale est constituée d'une matière de moulage renforcée par fibres (20) comprenant au moins deux bandes de fibres sans fin imprégnées intégrées (21) et assemblée par force avec la vitre arrière (2) et elle forme conjointement avec la vitre arrière une structure rigide à la flexion,
- étant entendu que les bandes de fibres sans fin (21) sont intégrées dans le cadre (11) par tronçons et présentent un agencement à la verticale (v) par rapport à la surface (H) du hayon arrière,
- **en ce que** les bandes de fibres sans fin (21) sont agencées à la verticale par rapport à la surface (H) et/ou à une distance verticale (d) par rapport à la surface (H),
- et étant entendu que les bandes de fibres sans fin sont reliées l'une avec l'autre au moyen de modelages dimensionnels de la matière de moulage renforcée par fibres (20) en tant que zones de jonction (22) produisant un effet de transmission des forces et de renfort.

2. Hayon arrière selon la revendication 1, **caractérisé par** une structure portante principale (10) qui présente, dans le cadre (11) et à l'intérieur du cadre, des zones (33) ayant des renforts en forme de moulures (24) et de nervures (25).

3. Hayon arrière selon la revendication 1, **caractérisé par** des bandes de fibres sans fin (21) qui s'étendent jusqu'à des points de levage de charge (34).

4. Hayon arrière selon la revendication 1, **caractérisé par** un montant transversal supplémentaire en forme de moulure (16) au niveau du bord inférieur de la vitre arrière (2).

5. Hayon arrière selon la revendication 1, **caractérisé par** des bandes de fibres sans fin (21) agencées à la verticale (v) par rapport à la surface (H) dans les montants longitudinaux (13, 14).

6. Hayon arrière selon la revendication 1, **caractérisé par** des parties du cadre (11) qui présentent une bande de fibres sans fin verticale (v) et horizontale (h).

7. Hayon arrière selon la revendication 1, **caractérisé par** des parties du cadre (11) qui présentent une bande de fibres sans fin (21) supérieure et inférieure horizontale (h).

8. Hayon arrière selon la revendication 1, **caractérisé par** un agencement (26) en diagonale ou en forme de croix de bandes de fibres sans fin (21) en dessous de la vitre arrière (2).

9. Hayon arrière selon la revendication 1, **caractérisé par** des montants transversaux et/ou des montants longitudinaux qui sont réalisés en tant que cuvettes ou moulures (24) avec un nervurage diagonal (25).

10. Hayon arrière selon la revendication 1, **caractérisé en ce que** les surfaces visibles (35, H) de la structure portante principale (10) sont formées par la matière de moulage renforcée par fibres (20) ou par un recouvrement externe (27).

11. Hayon arrière selon la revendication 1, **caractérisé par** un recouvrement externe en matière synthétique (27) relié à la structure portante principale (10) en dehors de la vitre arrière.

12. Hayon arrière selon la revendication 1, **caractérisé par** un becquet arrière en matière synthétique (30) fixé ou collé sur la structure portante principale (10).

13. Hayon arrière selon la revendication 1, **caractérisé par** des pièces d'insert (28) faisant fonction de points de levage de charge (34), qui sont intégrés dans la structure portante principale (10) en tant que fixations pour la serrure (6), les charnières (5), un moteur d'essuie-glace (7) ou pour des éléments d'amortisseur à ressort (8).

14. Hayon arrière selon la revendication 1, **caractérisé en ce que** la structure portante principale (10) est fabriquée par un procédé d'extrusion ou par un procédé de moulage par injection avec des bandes de fibres sans fin imprégnées (21) insérées dans une forme stabilisée dans un moule d'outil.

15. Hayon arrière selon la revendication 1, **caractérisé en ce que** la structure portante principale (10) présente dans une zone partielle un recouvrement interne supplémentaire (29) assemblé par forcé.
